**Europäisches Patentamt**

**European Patent Office**

**Office européen des brevets**

(19)

(11) Veröffentlichungsnummer: **0 033 944**
**B1**

(12) **EUROPÄISCHE PATENTSCHRIFT**

(45) Veröffentlichungstag der Patentschrift:
30.05.84

(51) Int. Cl.³: **H 04 N 9/11, H 04 N 1/46**

(21) Anmeldenummer: **81100777.2**

(22) Anmeldetag: **04.02.81**

(54) Vorrichtung zur elektronischen Abtastung von Aufnahmegegenständen.

(30) Priorität: **08.02.80 DE 3004717**

(43) Veröffentlichungstag der Anmeldung:
**19.08.81 Patentblatt 81/33**

(45) Bekanntmachung des Hinweises auf die Patenterteilung:
**30.05.84 Patentblatt 84/22**

(84) Benannte Vertragsstaaten:
**AT CH FR GB LI SE**

(56) Entgegenhaltungen:
**DE - A - 2 508 115**
**DE - A - 2 632 378**
**DE - A - 2 829 607**
**DE - A - 2 831 296**
**DE - B - 1 268 597**
**GB - A - 1 394 259**

(73) Patentinhaber: **AGFA-GEVAERT Aktiengesellschaft,
D-5090 Leverkusen 1 (DE)**

(72) Erfinder: **Stemme, Otto, Dr., Heideckstrasse 29,
D-8000 München 19 (DE)**
Erfinder: **Wagensonner, Eduard, Eichenstrasse 1,
D-8011 Aschheim (DE)**

## Beschreibung

Die Erfindung betrifft eine Vorrichtung zur elektronischen Abtastung von optischen Abbildungen von Aufnahmegegenständen mittels einer optoelektronischen Wandlervorrichtung mit den folgenden Merkmalen:

a) die elektronische Abtastvorrichtung enthält eine elektronische Auswerteschaltung, durch die die optische Abbildung zeilenweise in Videosignale umgesetzt wird, wobei eine der Auswerteschaltung nachgeordnete Bildwiedergaberöhrenanordnung vorgesehen ist, die Bestandteil einer Vorrichtung zur Aufzeichnung der Bildpunktsignale auf fotoempfindlichem Papier ist und wobei ein Monitor zur momentanen Wiedergabe des aufgenommenen Videobildes dient;

b) die optoelektronische Wandlervorrichtung ist eine CCD-Zeile, die eine gegenüber der Fernsehauflösung hochauflösende Anzahl von rot-, grün- und blausensibilisierten Fotodioden aufweist, wobei ein optoelektronisches Ablenksystem, vorzugsweise ein Spiegelsystem, vorgesehen ist, das mit einer vorgegebenen Frequenz die jeweilige Abbildung zeilenweise auf der CCD-Zeile abbildet, wobei die CCD-Zeile mit einer Schieberegisteranordnung versehen ist, die im Takt eines Oszillators die Bildsignale zeilenweise weiterleitet, wobei die Zeilentaktfrequenz mindestens um den Faktor der Fernsehzeilenanzahl grösser ist als die Frequenz der Spiegelanordnung und wobei der CCD-Zeile Signalverarbeitungsstufen nachgeschaltet sind, die im Takt der Bildpunktfrequenz der Bildwiedergabe-Röhrenanordnung zugeführt werden.

Aus der DE-OS 2 831 296 ist eine Vorrichtung zur elektronischen Abtastung von optischen Abbildungen mittels einer CCD-Wandlervorrichtung bekannt. Diese elektronische Abtastvorrichtung enthält eine elektronische Auswerteschaltung, durch die die optische Abbildung des abzutastenden Bildes zeilenweise in Video-Signale umgesetzt wird. Diese Video-Signale werden auf einer Bildwiedergabe-Röhrenanordnung dargestellt. Die optoelektronische Wandlervorrichtung weist eine bestimmte Anzahl von rot-, grün- und blausensibilisierten Fotodioden auf. Ein optoelektronisches Ablenksystem bildet die jeweilige Abbildung mit einer vorgegebenen Frequenz zeilenweise auf der CCD-Zeile ab. Die CCD-Zeile ist mit einer Schieberegisteranordnung versehen, die im Takt eines Oszillators die Bildsignale zeilenweise weiterleitet. Die Zeilentaktfrequenz ist mindestens um den Faktor der Fernsehzeilenanzahl grösser als die Frequenz der Spiegelanordnung. Der CCD-Zeile sind Signalverarbeitungsstufen nachgeschaltet, die im Takt der Bildpunktfrequenz der Bildwiedergabe-Röhrenanordnung zugeführt werden.

Aus der DE-OS 2 508 115 ist eine kompakte Faksimile-Abtasteinrichtung bekannt, bei der eine Bildvorlage durch eine CCD-Streifenanordnung zeilenweise abgetastet wird. Die Video-Abtasteinrichtung wird mit einer vorgegebenen Geschwindigkeit gegenüber der Bildvorlage bewegt. Eine Anpassung an die Fernsehnorm ist nicht vorgesehen. Mit Hilfe der bekannten Abtasteinrichtung ist eine Abtastung und Wiedergabe von Farbbildern nicht möglich. Die elektrischen Signale der kompakten Faksimile-Abtasteinrichtung werden auf einen geeigneten Grafik-Kopieempfänger übertragen.

Der Erfindung liegt die Aufgabe zugrunde, eine Vorrichtung der eingangs genannten Art zu schaffen, die ein elektronisch aufgezeichnetes Bild mit gegenüber der Fernsehtechnik hoher Auflösung ermöglichen soll, welches auf lichtempfindlichem Papier wiedergegeben werden soll. Hierbei soll die Bildfrequenz jedes aufgenommenen Bildes klein sein gegenüber der Fernsehbildfrequenz von 25 Hz. Zumindest vor der Durchführung des Kopiervorganges soll der Benutzer die Möglichkeit haben, das zu kopierende Bild auf einem Monitor zu betrachten, um so entsprechende Einstellungen der Helligkeit, des Kontrastes und der Farbsättigung vor dem Kopiervorgang vorzunehmen.

Gelöst wird die Aufgabe durch die folgenden weiteren Merkmale:

c) die Frequenz des optischen Ablenksystems (8, 9) ist sehr klein gegenüber der Fernsehbildfrequenz;

d) der Monitor (22) ist mit einer Fernsehspeichervorrichtung (21) versehen, die jeweils mindestens einen Bildpunkt überspringend höchstens jeden zweiten Bildpunkt speichert und darstellt;

e) die Aufzeichnungsvorrichtung des Videobildes weist entweder drei, den Grundfarben Rot, Grün, Blau zugeordnete Farbröhren (28, 29, 30), die bei jedem Bild mittels einer Torschaltung (25, 26, 27) gleichzeitig aktiviert werden, oder eine einzige Schwarz-Weiss-Bildröhre auf, vor der für jedes Bild nacheinander ein Rot-, Grün- und Blaufilter bewegt ist, wobei die Rot-, Grün- Blausignale mittels einer im Takt der Bildabtastung getakteten Zeit-Demultiplexstufe bildweise getrennt werden;

f) der CCD-Zeile mit Schieberegisteranordnung ist eine Bildpunktspeichereinrichtung nachgeschaltet, in die die Bildpunktsignale zeilenweise eingelesen und nach Abruf zeilenweise ausgelesen werden, wobei jedem Grundfarbwert Rot, Grün und Blau jeweils ein eigener Kanal zugeordnet ist.

Die Kombination der einzelnen Merkmale a) bis f) weist den Vorteil auf, dass mit Hilfe der hochauflösenden CCD-Zeile und eines nicht an die Fernsehfrequenz angepassten Ablenksystems ein elektronisches Bild erzeugt und in einem Bildpunktspeicher abgespeichert wird. Infolge der gegenüber der Fernsehfrequenz sehr kleinen Frequenz des Ablenksystems ergibt sich der Vorteil, dass in Frequenzbereichen gearbeitet wird, die einer hohen Auflösung und guten Bildverarbeitung zugute kommen. Vor dem eigentlichen Printvorgang des Videobildes besteht die Möglichkeit, das abgetastete Bild in einem Monitor zu kontrollieren, wobei hierbei die Helligkeit, die Farbgebung, die Korrektur des Kontrastes, die Einstellung der Flankensteilheit, eingestellt bzw. kontrolliert werden können. Ein weiterer Vorteil besteht darin, dass aus dem hochauflösenden Video-Bildsignalinhalt jeweils nur höchstens jeder zweite Bildpunkt gespeichert und dargestellt wird, was zur Kontrolle völlig ausreichend ist. Eine aufwendige Monitorvorrichtung ist hierdurch vermieden. Mit Hilfe dieser einfachen Kontrollmöglichkeit kann also vor dem eigentlichen Printen jedes abgetastete und videomässig aufbereitete Bild individuell gestaltet werden. Nach der Beendigung der sogenannten Voreinstellungen erfolgt die Aufzeichnung des Videobildes
entweder durch drei den Grundfarben Rot, Grün und
Blau zugeordnete Farbröhren oder aber durch eine
einzige Schwarz-Weiss-Röhre, vor der für jedes Bild
während der Dauer einer Bildabtastung und synchron mit dieser nacheinander ein Rot-, Grün- und
Blaufilter bewegt ist. Der Kontrast des auf dem Monitor sichtbaren Filmbildes kann im unteren Grenzbereich liegen. Dieser Kontrast kann sogar schlechter
sein als der Kontrast von normalen Fernsehbildern,
da der Monitor dem Benutzer anzeigen soll, in welcher Weise das Bild zu korrigieren ist.

Aus der FKTG-Veröffentlichung des Vortrages von
D. Poetsch, Seiten 219 bis 223, ist zwar ein CCD-
Zeilenabtaster mit spektraler Zerlegung auf die Rot-,
Grün- und Blausensoren bekannt. Auch ist in dieser
Vorrichtung eine Bildpunktspeichereinrichtung vorhanden. Dieser Speicher ist jedoch als 625-Zeilen-
Vollbildspeicher ausgebildet und dient dazu, das abgespeicherte Bild fernsehnormgerecht wiederzugeben. Die erfindungsgemässe Vorrichtung hingegen
beinhaltet keine fernsehnormgerechte Aufbereitung
des Bildes. Die erfindungsgemässe Vorrichtung zielt
vielmehr auf eine Bildpunktspeichereinrichtung mit
hoher Auflösung, um in Abweichung vom Fernsehnormbild ein hochauflösendes Bild auf einem fotoempfindlichen Papier zu speichern.

Gemäss weiterer Ausbildung weist die Aufzeichnungsvorrichtung des Videobildes entweder drei den
Grundfarben Rot, Grün und Blau zugeordnete Farbröhren, die bei jedem Bild mittels einer Torschaltung
gleichzeitig aktiviert werden, oder eine einzige
Schwarz-Weiss-Bildröhre auf, vor der für jedes Bild
während der Dauer einer Bildabtastung und synchron mit dieser nacheinander ein Rot-, Grün- und
Blaufilter bewegt ist, wobei die RGB-Signale mittels
einer im Takt der Bildabtastung getakteten Zeit-Demultiplexstufe bildweise getrennt werden.

Gemäss weiterer Ausgestaltung ist der CCD-Zeile
mit Schieberegister-Anordnung eine Bildpunktspeicher-Einrichtung nachgeschaltet, in die die Bildpunktsignale zeilenweise eingelesen und nach Abruf
zeilenweise ausgelesen werden, wobei jedem
Grundfarbwert Rot, Grün, Blau jeweils ein eigener
Kanal zugeordnet ist.

Gemäss weiterer Ausgestaltung ist zur Wiedergabe und zum Kopieren von Negativ-Abbildungen eine
Phasenumkehrschaltung vorgesehen, die vorzugsweise aus Inverterstufen besteht.

In vorteilhafter Weise ist der CCD-Schaltung zur
Kontrastkorrektur eine γ-Entzerrungsstufe sowie zur
Vergrösserung der Flankensteilheit der Übertragungssignale eine Crispening-Stufe nachgeschaltet.

Gemäss weiterer Ausgestaltung ist die CCD-Zeile
über eine Rot-, Blau- und Grün-Matrix mit einem
Schwarzwertdetektor verbunden, der über einen
Vergleichsverstärker auf einem Gleichstrommotor
arbeitet, der mit einer Blendenanordnung verbunden
ist, durch die der Lichtstrom einer die aufzunehmende Abbildung beleuchtenden Beleuchtungseinrichtung regelbar ist.

In vorteilhafter Weise führt vom Ausgang des Vergleichsverstärkers eine Steuerverbindung zu einer
logischen Verknüpfungsstufe, die bei Einschaltung eines Startsignals über eine Torstufenanordnung für
eine vorgegebene Zeitspanne die Wiedergaberöhren
bzw. die Wiedergaberöhre einschaltet.

Gemäss weiterer Ausgestaltung ist bei Verwendung einer Schwarz-Weiss-Wiedergaberöhre mit bei
jeder Bildabtastung abwechselnd vorschwenkbarem
bzw. vorbewegbarem Rot-, Grün- oder Blaufilter ein
Digitalzähler vorgesehen, dessen Takteingang mit einem Oszillator verbunden ist, dessen Frequenz
gleich der Schwingfrequenz des Ablenkspiegelsystems ist, dass die Ausgänge des Zählers über drei
Gatter mit den drei Farbkanälen derart verbunden
sind, dass für jeweils ein Bild nacheinander Rot-Bildsignale, Grün-Bildsignale und Blau-Bildsignale übertragen werden.

Zweckmässigerweise sind die Gatter NOR-Gatter,
wobei der erste Ausgang eines 2 Bit-Digitalzählers
direkt mit dem ersten Eingang des ersten und dritten
NOR-Gatters und über einen Inverter mit dem ersten
Eingang des zweiten NOR-Gatters und der zweite
Ausgang des 2 Bit-Digitalzählers direkt mit dem
zweiten Eingang des ersten und zweiten NOR-Gatters und über einen Inverter mit dem dritten NOR-
Gatter verbunden ist, wobei ein mit beiden Ausgängen des Zählers verbundenes NAND-Gatter an den
Reseteingang des Zählers angeschlossen ist, dessen
Takteingang mit dem Bildfrequenzoszillator verbunden ist, und wobei eine zweite gleichartig beschaltete Schaltungskombination vorgesehen ist, deren 2
Bit-Digitalzähler mit einem Bildimpulstaktgenerator
verbunden ist, deren NOR-Gatter jeweils einen dritten Eigang aufweisen, welcher mit dem Ausgang des
jeweils entsprechenden NOR-Gatters der ersten
Kombinationsschaltung verbunden ist.

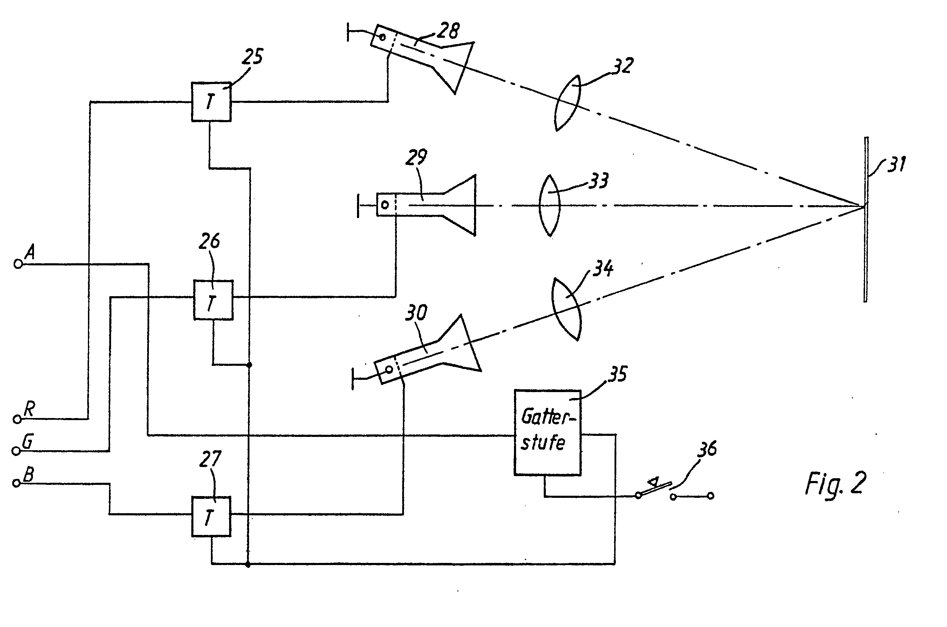

Im folgenden wird die Erfindung anhand von in den
Fig. 1 bis 6 dargestellten Ausführungsbeispielen beschrieben. Es zeigen:

die Fig. 1, 2 und 3 ein erstes Ausführungsbeispiel
und

die Fig. 4, 5 und 6 ein zweites Ausführungsbeispiel.

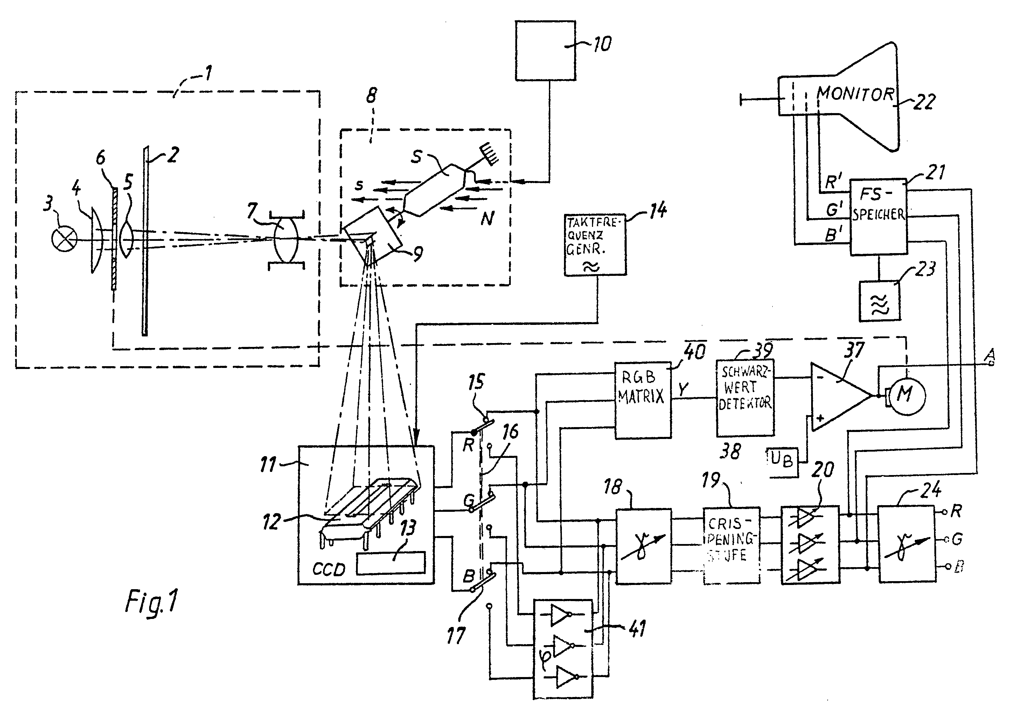

Gemäss Fig. 1 ist mit 1 eine Filmvorlagevorrichtung bezeichnet, die einen Stehbildnegativfilm oder
Stehbildpositivfilm 2 aufweist, der durch eine Lampenanordnung 3 über eine Optik 4, 5 beleuchtet
wird. Zwischen den optischen Gliedern 4 und 5 ist eine Blende 6 vorgesehen. Eine weitere Optik ist mit 7
bezeichnet.

Ein Schwingspiegelsystem 8 enthält einen Schleifenschwinger S, sowie einen Schwingspiegel 9. Ein
das Schwingspiegelsystem 8 periodisch antreibender Generator ist mit 10 bezeichnet. Die Periodendauer dieses Generators ist gross gegenüber der Periodendauer eines Fernsehbildes. Sie liegt vorzugsweise im Bereich von einer Sekunde.

Durch den Kippspiegel 9 wird das optische Strahlenbündel des aufzunehmenden Bildes einer CCD-
Anordnung 11 zugeführt, die eine CCD-Zeile 12 sowie eine Schieberegisteranordnung 13 aufweist. Ein
auf die CCD-Anordnung wirkender Taktgenerator ist
mit 14 bezeichnet. Im Takt dieses Taktgenerators 14
werden die einzelnen Bildpunkte der CCD-Zeile 12
über die Schieberegisteranordnung 13 nach draussen geschoben. Ein erster Ausgangskanal R ist der
Farbe Rot, ein zweiter Ausgangskanal G der Farbe Grün und ein dritter Ausgangskanal B der Farbe Blau zugeordnet. Die Ausgangskanäle R, G und B führen über eine Schalteranordnung 15, 16, 17 zu einer $\gamma$-Entzerrerstufe 18 zur Kontrastkorrektur. Hierdurch wird eine sogenannte Schwärzungslinearität erzielt.

Der $\gamma$-Entzerrungsstufe 18 ist eine Crispening-Stufe 19 nachgeschaltet. Hierunter versteht man eine Anordnung, die bei begrenzter Bandbreite eine Versteilerung der Flanken von übertragenen Impulsen ermöglicht, ohne dass hierbei die Bandbreite des Verstärkerweges vergrössert wird. Aus dem Eingangssignal wird ein Korrektursignal gewonnen, welches zum Ausgangssignal hinzuaddiert wird. Dieses Signal hat eine solche Form, dass die Flanken des Impulses versteilert werden.

Der Crispening-Stufe ist eine Verstärkeranordnung 20 nachgeschaltet.

Von der Verstärkeranordnung führt einerseits für jeden Farbkanal R, G, B eine Verbindung zu einem Fernsehbildspeicher 21, dessen Ausgänge R', G' und B' mit einer Farbmonitor-Röhre 22 verbunden sind. Ein den Fernsehbildspeicher 21 taktender Oszillator ist mit 23 bezeichnet. Die Taktfrequenz ist derart gewählt, dass auf dem Monitor ein in etwa flimmerfreies Bild entsteht. Damit der Fernsehbildspeicher 21 keine zu hohe Kapazität an Speicherplätzen benötigt, wird von den Bildpunkten der CCD-Zeile nur jeder vierte Bildpunktimpuls ausgewertet. Zweckmässigerweise verwendet man eine CCD-Zeile mit 1700 bis 2000 Bildpunkten. Hierbei wird man die Hälfte der Bildpunkte für das Helligkeitssignal und je die Hälfte der verbleibenden Bildpunkte den Farben Rot und Blau zuordnen. Das Grünsignal wird dann aus den Signalen für die Helligkeit gewonnen.

Die $\gamma$-Entzerrungsstufe 18 dient in erster Linie zur Linearisierung des Grauwertes für den Monitor 22.

Andererseits führt von den Ausgängen der Verstärkeranordnung 20 jeweils eine Verbindung zu einer weiteren $\gamma$-Entzerrungsstufe 24, deren Ausgänge R, G und B zu Torstufen 25, 26 und 27 führen. Die Ausgänge der Torstufen 25, 26 und 27 sind mit Steuergittern von Farbröhren 28, 29 und 30 verbunden. Die Bildwiedergaberöhre 28 sendet Rotsignale, die Bildwiedergaberöhre 29 Grünsignale und die Bildwiedergaberöhre 30 Blausignale aus. Die drei Röhren 28 bis 30 projizieren auf einem Fotopapier 31 ein Farbbild. Optiken der Farbröhren 28 bis 30 sind mit 32, 33 und 34 bezeichnet.

Die $\gamma$-Entzerrungsstufe 24 dient zur Linearisierung des Grauwertes der Farbröhren 29 bis 30.

Die Eingänge der Torstufen 25, 26 und 27 sind gemeinsam mit einer Gatterstufe 35 verbunden, deren Eingang mit einem Steuerschalter 36 verbunden ist. Der weitere Eingang der Gatterstufe 35 ist über eine Anschlussstelle A mit dem Ausgang eines Operationsverstärkers 37 verbunden. Diese Steuerleitung bewirkt, dass nur bei einem bestimmten Steuerpotential die Gatterstufe 35 aufgesteuert wird, um so den Startimpuls des Schalters 36 an die Torstufen 27 bis 25 weiterzuleiten.

Der nichtinvertierende Eingang des Operationsverstärkers 37 ist mit einer Bezugspotentialquelle 38 und der invertierende Eingang mit dem Ausgang eines Schwarzwert-Detektors 39 verbunden. Der Eingang des Schwarzwert-Detektors ist mit dem Ausgang Y einer Rot-, Grün-, Blau-Matrix 40 verbunden. Die drei Eingänge der RGB-Matrix 40 sind mit den entsprechenden Ausgangsleitungen der CCD-Anordnung 11 verbunden.

Wird als Bildvorlage ein Negativ verwendet, so werden die Schalter 15 bis 17 in ihre zweite Position bewegt, in der für jeden Kanal RGB eine Phasenumkehrstufe wirksam wird. Durch die Phasenumkehr erhält man jeweils um 180 Grad phasengedrehte Bildpunktsignale (Komplementär-Farbbildpunktsignale).

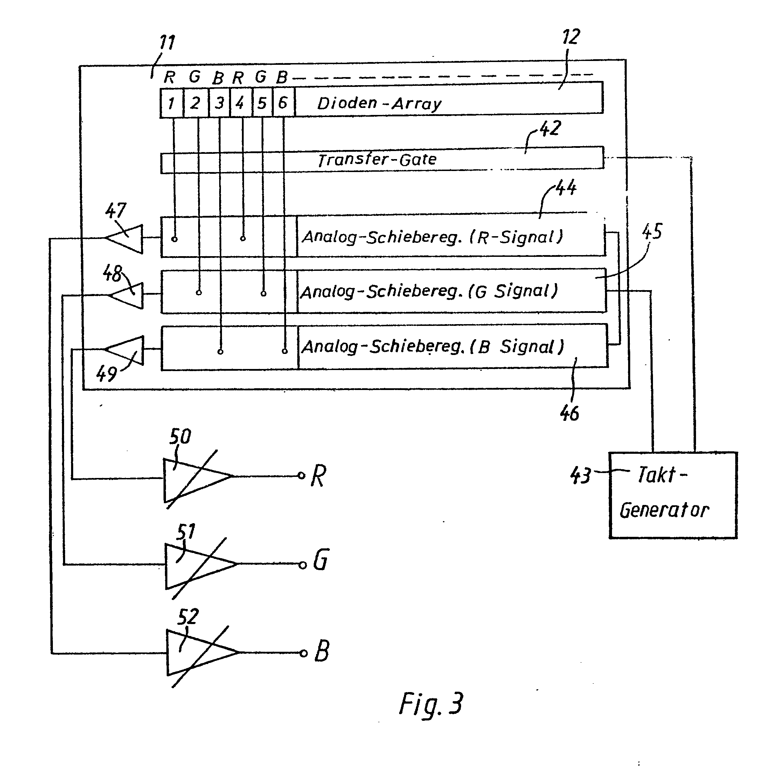

Gemäss Fig. 3 weist die CCD-Anordnung 11 ein CCD-Fotodioden-Array 12 auf, welches abwechselnd nebeneinander rot-, grün- und blausensibilisierte Fotodioden aufweist. Der CCD-Fotodiodenzeile 12 ist ein sogenanntes Transfer-Gate 42 nachgeschaltet. Das Transfer-Gate 42 ist mit einem Taktgenerator 43 verbunden. Gemäss Fig. 3 werden nur die Signale von Bildsensorelementen oder Fotodioden gleicher Farbempfindlichkeit je einem Analog-Schieberegister 44, 45, 46 über das Transfer-Gate 42 zugeführt. Es ist also je ein Schieberegister für die rot-, grün- und blauempfindlichen Fotodioden notwendig, wobei das Transfer-Gate 42 wieder die Fotodiodenspannungen parallel und gleichzeitig an alle Stellen der Schieberegister abgibt. Beim Herausschieben der Ladungen aus den drei Analog-Schieberegistern 44 bis 46 wird der gleiche Takt verwendet (Bildpunkttakt). Hierdurch stehen die Farbsignale R, G und B bereits parallel an den drei Ausgängen der CCD-Anordnung 11 an. Diese Signale können also ohne weiteres der aus der Fernsehtechnik bekannten Signalaufbereitungs- und Wiedergabeeinrichtung zugeführt werden. Ausgangsverstärker sind mit 47, 48, 49, 50, 51 und 52 bezeichnet.

Beim zweiten Ausführungsbeispiel ist die CCD-Anordnung mit 53 bezeichnet. Das Bildsensorsystem weist eine Farbsignalgewinnung durch eine Zeit-Demultiplexschaltung auf. Die CCD-Schaltung enthält eine Fotodiodenzeile 54, welche über ein Transfer-Gate 55 auf ein Analog-Schieberegister 56 geschaltet ist. Die Taktgabe erfolgt durch einen Taktgenerator 57. Im Ausgangsstromkreis des Analog-Schieberegisters 56 ist ein Ladungsverstärker 58 vorgesehen. Am Ausgang des Ladungsverstärkers 58 steht ein sämtliche Farbanteile jedes Bildpunktes enthaltendes serielles Farbsignal A zur Verfügung. Das Farbsignal A wird einem dreikanaligen Demultiplexer 59 zugeführt, an dessen Ausgang die Farbsignale R, G und B zur Verfügung stehen. Die Steuerung des Demultiplexers 59 erfolgt über eine zugehörige Decodierungslogik 60. Sie enthält einen 2 Bit-Digitalzähler Z1, NOR-Gatter 61, 62, 63 und ein NAND-Gatter 64. Der Ausgang Q1 des Zählers Z1 ist direkt mit dem ersten Eingang des NOR-Gatters 61, mit dem ersten Eingang des dritten NOR-Gatters 63 und mit dem ersten Eingang der NAND-Gatters 64 und über einen Inverter 65 mit dem ersten Eingang des zweiten NOR-Gatters 62 verbunden.

Der zweite Ausgang Q2 des Zählers Z1 ist direkt mit dem dritten Eingang des ersten NOR-Gatters 61 und des zweiten NOR-Gatters 62 sowie mit dem zweiten Eingang des NAND-Gatters 64 sowie über einen Inverter 66 mit dem dritten Eingang des dritten NOR-Gatters 63 verbunden. Vom Ausgang des NAND-Gatters 64 führt eine Verbindung zum Reset-Eingang des Zählers Z1. Des weiteren ist der Takteingang TA des Zählers Z1 mit dem Taktgenerator 57 verbunden. Die Ausgänge der NOR-Gatter 61 bis 63 führen zu dem dreikanaligen Demultiplexer 59.

Der lichtempfindliche Teil der CCD-Schaltung besteht aus der Fotodiodenzeile 54 mit z.B. 1800 in einer Reihe angeordneten Silicium-Fotodioden in einem Rasterabstand von z.B. $13\,\mu$. Die gesamte Breite der Zeile beträgt ungefähr 24 mm. Ist z.B. zum Zeitpunkt t = 0 die erste Zeile des Bildes auf der Fotodiodenzeile 54 abgebildet, so wird mittels einer Impulsflanke das Transfer-Gate 55 kurzzeitig auf Durchlass geschaltet und das gespeicherte Helligkeitssignal (jedes Bildsensorelement der Fotodiodenzeile ist mit einem Speicherkondensator verbunden) auf das Analog-Schieberegister 56 parallel übertragen. Ab diesem Zeitpunkt schieben die Taktimpulse TA das in dem Analog-Schieberegister 56 gespeicherte Signal nach aussen. Es ist über den Ladungsverstärker 58 am Ausgang der CCD-Schaltung verfügbar. Die Frequenz der Taktimpulse T ist so gewählt, dass bei 1800 Bildpunkten in der CCD-Zeile 54 und bei z.B. 1500 Zeilen sich eine Bildfrequenz von z.B. einer Sekunde ergibt.

Am Ausgang der CCD-Schaltung steht das serielle Farbsignal A zur Verfügung, das alternativ im Dreiertakt die Rot-, Grün- und Blauanteile jedes Bildpunktes enthält. Dieses Signal wird mit Hilfe des dreikanaligen Demultiplexers 59 und der zugehörigen Decodierungslogik 60 in die parallelen Farbsignale R, G und B umgewandelt.

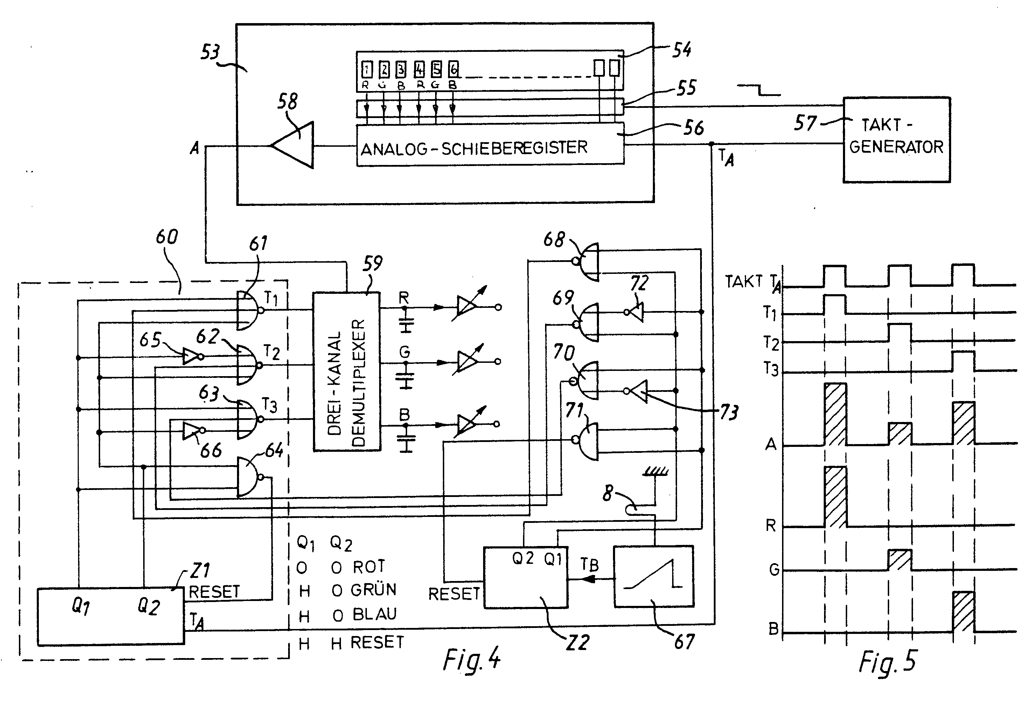

Der Verlauf der Taktsignale sowie der Signale an den Anschlussstellen T1, T2 und T3, sowie in den Leitungen A, R und B sind in Fig. 5 dargestellt.

Des weiteren ist ein zweiter Zähler Z2 vorgesehen, der dem Zähler Z1 gleichartig ist. Dieser Digitalzähler Z2 wird durch einen Taktgenerator 67 angesteuert, dessen Eingang mit dem Schwingspiegelsystem 8 verbunden ist. Demnach ist die Frequenz des Taktgenerators 67 gleich der Bildfrequenz. Die Ausgänge Q1 und Q2 des zweiten Zählers Z2 sind in derselben Weise wie beim Zähler Z1 mit NOR-Gattern 68, 69 und 70 verbunden. Ein NAND-Gatter 71 entspricht dem NAND-Gatter 64 des Zählers Z1. Inverter sind mit 72 und 73 bezeichnet. Hinsichtlich der Farben Rot, Grün und Blau weist der Zähler Z2 die gleiche Codierung auf wie der Zähler Z1. Demzufolge ist der Ausgang des NOR-Gatters 68 mit dem zweiten Eingang des entsprechenden NOR-Gatters 61, der Ausgang des NOR-Gatters 69 mit dem zweiten Eingang des entsprechenden NOR-Gatters 62 und der Ausgang des NOR-Gatters 70 mit dem zweiten Eingang des entsprechenden NOR-Gatters 63 verbunden.

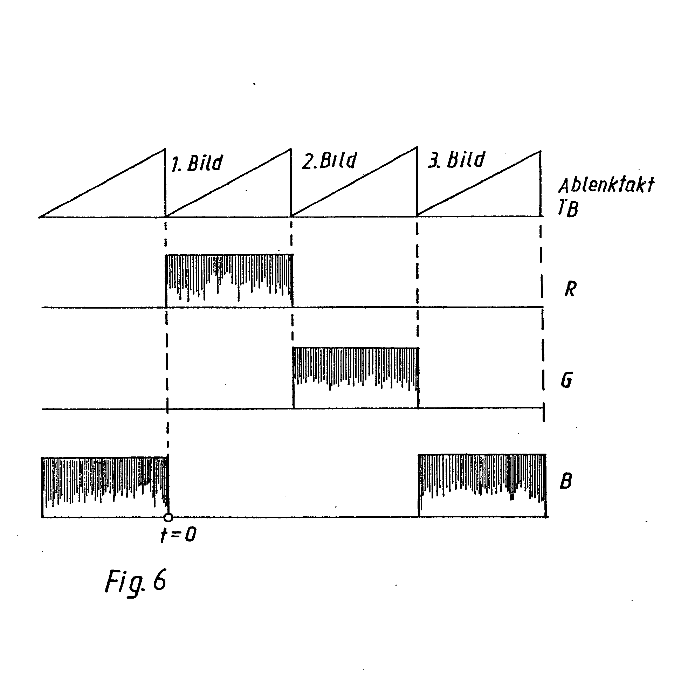

Durch diese Beschaltung wird bewirkt, dass gemäss Fig. 6 während der ersten Bildphase nur die Rotsignale, nach der zweiten Bildabtastung nur die Grünsignale und nach der dritten Bildabtastung nur die Blausignale einer nicht dargestellten Schwarz-Weiss-Bildröhre zugeführt werden. In nicht dargestellter Weise wird im Takt der Bildfrequenz vor die Schwarz-Weiss-Bildröhre nacheinander ein Rotfilter, ein Grünfilter und ein Blaufilter bewegt.

**Patentansprüche**

1. Vorrichtung zur elektronischen Abtastung von optischen Abbildungen von Aufnahmegegenständen (2) mittels einer optoelektronischen Wandlervorrichtung (11) mit folgenden Merkmalen:

a) die elektronische Abtastvorrichtung enthält eine elektronische Auswerteschaltung, durch die die optische Abbildung zeilenweise in Videosignale umgesetzt wird, wobei eine der Auswerteschaltung nachgeordnete Bildwiedergaberöhrenanordnung (28, 29, 30) vorgesehen ist, die Bestandteil einer Vorrichtung zur Aufzeichnung der Bildpunktsignale auf fotoempfindlichem Papier (31) ist und wobei ein Monitor (22) zur momentanen Wiedergabe des aufgenommenen Videobildes dient;

b) die optoelektronische Wandlervorrichtung (11) ist eine CCD-Zeile (12), die eine gegenüber der Fernsehauflösung hochauflösende Anzahl von rot-, grün- und blausensibilisierten Fotodioden aufweist, wobei ein optoelektronisches Ablenksystem (8, 9), vorzugsweise ein Spiegelsystem, vorgesehen ist, das mit einer vorgegebenen Frequenz die jeweilige Abbildung (2) zeilenweise auf der CCD-Zeile (12) abbildet, wobei die CCD-Zeile mit einer Schieberegisteranordnung (13) versehen ist, die im Takt eines Oszillators (14 bzw. 43) die Bildsignale zeilenweise weiterleitet, wobei die Zeilentaktfrequenz mindestens um den Faktor der Fernsehzeilenanzahl, z.B. 625 grösser ist, als die Frequenz der optischen Ablenkanordnung (8, 9), und wobei der CCD-Zeile Signalverarbeitungsstufen (18, 19, 20, 24, 41) nachgeschaltet sind, über die die Bildsignale im Takt der Bildpunktfrequenz der Bildwiedergabe-Röhrenanordnung (28, 29, 30) zugeführt werden;
gekennzeichnet durch die folgenden weiteren Merkmale:

c) die Frequenz des optischen Ablenksystems (8, 9) ist sehr klein gegenüber der Fernsehbildfrequenz;

d) der Monitor (22) ist mit einer Fernsehspeichervorrichtung (21) versehen, die jeweils mindestens einen Bildpunkt überspringend höchstens jeden zweiten Bildpunkt speichert und darstellt;

e) die Aufzeichnungsvorrichtung des Videobildes weist entweder drei, den Grundfarben Rot, Grün, Blau zugeordnete Farbröhren (28, 29, 30), die bei jedem Bild mittels einer Torschaltung (25, 26, 27) gleichzeitig aktiviert werden, oder eine einzige Schwarz-Weiss-Bildröhre auf, vor der für jedes Bild nacheinander ein Rot-, Grün- und Blaufilter bewegt ist, wobei die Rot-, Grün-, Blausignale mittels einer im Takt der Bildabtastung getakteten Zeit-Demultiplexstufe bildweise getrennt werden;

f) der CCD-Zeile mit Schieberegisteranordnung ist eine Bildpunktspeichereinrichtung nachgeschaltet, in die die Bildpunktsignale zeilenweise eingelesen und nach Abruf zeilenweise ausgelesen werden, wobei jedem Grundfarbenwert Rot, Grün und Blau jeweils ein eigener Kanal zugeordnet ist.

2. Vorrichtung nach Anspruch 1, dadurch gekennzeichnet, dass zur Wiedergabe und zum Kopieren von Negativ-Abbildungen eine Phasenumkehrschaltung (41) vorgesehen ist, die vorzugsweise aus Inverterstufen besteht.

3. Vorrichtung nach Anspruch 1 oder 2, dadurch gekennzeichnet, dass der CCD-Schaltung zur Kontrastkorrektur eine γ-Entzerrungsstufe sowie zur Vergrösserung der Flankensteilheit der Übertragungssignale eine Crispening-Stufe nachgeschaltet ist.

4. Vorrichtung nach einem der vorhergehenden Ansprüche, dadurch gekennzeichnet, dass die CCD-Zeile (12) über eine Rot-Grün-Blau-Matrix mit einem Schwarzwertdetektor (39) verbunden ist, der über einen Vergleichsverstärker (37) auf einen Gleichstrommotor (M) arbeitet, der mit einer Blendenanordnung verbunden ist, durch die der Lichtstrom einer die aufzunehmende Abbildung beleuchtenden Beleuchtungseinrichtung regelbar ist.

5. Vorrichtung nach Anspruch 4, dadurch gekennzeichnet, dass vom Ausgang des Vergleichsverstärkers (37) eine Steuerverbindung (A) zu einer logischen Verknüpfungsstufe (35) führt, die bei Einschaltung eines Startsignals (36) über eine Torstufenanordnung (25, 26, 27) für eine vorgegebene Zeitspanne die Wiedergaberöhren (28, 29, 30) bzw. die Wiedergaberöhre einschaltet.

6. Vorrichtung nach Anspruch 5, dadurch gekennzeichnet, dass bei Verwendung einer Schwarz-Weiss-Wiedergaberöhre mit bei jeder Bildabtastung abwechselnd vorschwenkbaren bzw. vorbewegbaren Rot-, Grün- oder Blau-Filter ein Digitalzähler (Z2) vorgesehen ist, dessen Takteingang mit einem Oszillator (67) verbunden ist, dessen Frequenz gleich der Schwingfrequenz des Ablenkspiegelsystems ist, dass die Ausgänge des Zählers (Z2) über drei Gatter (68, 69, 70; 61, 62, 63) mit den drei Farbkanälen derart verbunden sind, dass für jeweils ein Bild nacheinander Rot-Bildsignale, Grün-Bildsignale und Blau-Bildsignale übertragen werden.

7. Vorrichtung nach Anspruch 6, dadurch gekennzeichnet, dass die Gatter NOR-Gatter (68, 69, 70) sind, dass der erste Ausgang (Q1) eines 2 Bit-Digitalzählers (Z2) direkt mit dem ersten Eingang des ersten und dritten NOR-Gatters (68, 70) und über einen Inverter (72) mit dem ersten Eingang des zweiten NOR-Gatters (69) und der zweite Ausgang (Q2) des 2 Bit-Digitalzählers (Z2) direkt mit dem zweiten Eingang des ersten und zweiten NOR-Gatters (68, 69) und über einen Inverter (73) mit dem dritten NOR-Gatter (70) verbunden ist, dass ein mit beiden Ausgängen (Q1, Q2) des Zählers (Z2) verbundenes NAND-Gatter (71) an den Reset-Eingang des Zählers angeschlossen ist, dessen Takteingang mit dem Bildfrequenzoszillator (67) verbunden ist, dass eine zweite gleichartig beschaltete Schaltungskombination (60) vorgesehen ist, deren 2 Bit-Digitalzähler (Z1) mit einem Bildimpuls-Taktgenerator (57) verbunden ist und deren NOR-Gatter (61, 62, 63) jeweils einen dritten Eingang aufweisen, welche mit dem Ausgang des jeweils entsprechenden Nor-Gatters (68, 69, 70) der ersten Schaltungskombination verbunden sind.

**Claims**

1. Apparatus for the electronic scanning of optical images of objects to be photographed (2) by means of an opto-electronic transducer device (11) with the following characteristics:

a) the electronic scanning device comprises an electronic analyser circuit whereby the optical image is linewise converted into videosignals, said analyser circuit being associated with an image reproduction tube system (28, 29, 30) arranged in succession therewith and being a component part of a device for recording the image scanning point signals on photosensitive paper (31) with a monitor (22) being provided for instantaneous reproduction of the recorded video picture;

b) the opto-elelctronic transducer device (11) is a CCD scanning line (12) (charge coupled device) which comprises a high resolution number, by comparison with the television resolution, of red, green and blue sensitised photodiodes, an opto-electronic deflector system (8, 9), preferably a mirror system, being provided which at a predetermined frequency reproduces the given object image (2) linewise on the CCD scanning line (12), the CCD line being provided with a shift register arrangement (13) which in accordance with the timing of an oscillator (14 or 43) transmits the image signals further line by line, the line cycle frequency being greater by at least the factor of the television line number, e.g. 625, that the frequency of the optical deflector system (8, 9) and the CCD line being associated with signal processing stages (18, 19, 20, 24, 41) arranged in succesion therewith through which the video signals are fed to the image reproduction tube system (28, 29, 30) in time with the image (video) point scanning frequency;

characterised by the following further characteristic provisions:

c) the frequency of the optical deflector systems (8, 9) is very low by comparison with the television picture frequency;

d) the monitor (22) is provided with a television memory store device (21) which, jumping in each case at least one video point, stores and presents at most every second video point;

e) the video picture recording device comprises either three colour tubes (28, 29, 30) associated respectively with the basic colours, red, green and blue, said tubes being simultaneously activated for each picture by means of a gate circuit (25, 26, 27) or a single monochrome (black and white) tube in front of which are successively placed one red, one green and one blue filter for each picture, the red, green and blue signals being separated by pictures by means of a time demultiplexer stage which is synchronised with the image scanning process;

f) following the CCD line with shift register system there is arranged a video point store into which the video point signals are fed line by line and from which they are retrieved line by line on demand, a separate channel being provided for each basic colour value, red, green and blue.

2. Apparatus according to claim 1, characterised in that a phase inverter circuit (41), preferably consisting of inverter stages, is provided for reproduction and copying of negative pictures.

3. Apparatus according to claim 1 or 2, characterised in that following the CCD circuit there is arranged a γ distortion corrector stage for contrast correction and a crispening stage for increasing the width of transmission interval (flank steepness) of the transmission signals.

4. Apparatus according to any preceding claim, characterised in that the CCD line (12) is connected via red-green-blue matrix to a black level detector (39) which through a difference amplifier (37) influences a d-c-motor (M) associated with a light stop or shutter system whereby the light current can be regulated for a light source illuminating the scanned image.

5. Apparatus according to claim 4, characterised in that a control line connection (A) leads from the output of the difference amplifier (37) to a logic link stage (35) which switches on, through a system of gate stages (25, 26, 27), the reproduction tube or tubes (28, 29, 30) for a predetermined length of time when a start signal (36) is given.

6. Apparatus according to claim 5, characterised in that, when using a monochrome (black and white) tube with red, green or blue filters which are adapted to be passed in front of said tube in alternating succession for each picture scan, there is provided a digital counter (Z2) of which the clock input is connected to an oscillator (67) working at equal frequency to the oscillation frequency of the deflecting mirror system, and in that the outputs of said counter (Z2) are applied through three gates (68, 69, 70; 61, 62, 63) to the three colour channels in such a manner that red video signals, green video signals and blue video signals are transmitted in succession with each other for each picture.

7. Apparatus according to claim 6, characterised in that the said gates are NOR gates (68, 69, 70), that the first output (Q1) of a 2-bit digital counter (Z2) is applied directly to the first input terminal of the first and third NOR gates (68, 70) and indirectly, through an inverter (72) to the first input terminal of the second NOR gate (69) and the second output (Q2) of the 2-bit digital counter (Z2) is applied directly to the second input terminals of the first and second NOR gates (68, 69) and indirectly, through an inverter (73) to the third NOR gate (70), that an NAND gate (71) which is connected with both outputs (Q1, Q2) of the counter (Z2) is connected to the re-set input of the counter, the time pulse input of which is connected with the picture frequency oscillator (67), that a second, identically switched combination (60) is provided of which the 2-bit digital counter (Z1) is connnected to a picture impulse time generator (57) and of which the NOR gates (61, 62, 63) each comprise a third input terminal connected to the output terminal of the respective corresponding NOR-gate (68, 69, 70) in the first switching combination.

## Revendications

1. Dispositif pour le balayage électronique d'images optiques d'objets de prise de vue (2) à l'aide d'un dispositif de conversion électronique (11), présentant les caractéristiques suivantes:

a) le dispositif de balayage électronique contient un circuit d'exploitation électronique au moyen duquel l'image optique est convertie ligne par ligne en signaux vidéo, et il est prévu un dispositif à tubes images (28, 29, 30) disposé en aval du circuit d'exploitation et qui fait partie d'un dispositif d'enregistrement des signaux de points d'image sur un papier photosensible (31), tandis qu'un écran de contrôle (32) sert à la reproduction instantanée de l'image vidéo enregistrée;

b) le dispositif de conversion optoélectronique (11) est une ligne CCD (12) qui possède un nombre de photodiodes sensibilisées au rouge, au vert et au bleu, fournissant une résolution supérieure à la résolution de la télévision, tandis qu'il est prévu un système de déviation optoélectronique (8, 9), de préférence un système à miroir, qui reproduit l'image respective (2) ligne par ligne sur la ligne CCD (12) avec une fréquence prédéterminée, que la ligne CCD est munie d'un dispositif à registres à décalage (13), qui retransmet ligne par ligne les signaux d'images à la cadence d'un oscillateur (14 ou 43), que la fréquence d'analyse des lignes est supérieure, au moins du facteur du nombre des lignes de télévision, par exemple 625, à la fréquence du dispositif de déviation optique (8, 9) et qu'en aval de la ligne CCD sont montés des étages de traitement de signaux (18, 19, 20, 24, 41) par l'intermédiaire desquels les signaux d'image sont envoyés à la cadence de la fréquence des points d'image au dispositif à tubes images (28, 29, 30); caractérisé par les autres caractéristiques suivantes:

c) la fréquence du système de déviateur optique (8, 9) est très faible par rapport à la fréquence d'image de télévision;

d) l'écran de contrôle (22) est équipé d'un dispositif de mémoire de télévision (21) qui mémorise et représente respectivement au moins un point d'image en sautant tout au plus un point d'image sur deux;

e) le dispositif d'enregistrement de l'image vidéo comporte soit trois tubes en couleurs (28, 29, 30) associés aux couleurs fondamentales, à savoir le rouge, le vert et le bleu et qui sont activés simultanément pour chaque image au moyen d'un circuit de porte (25, 26, 27), soit un seul tube image en noir et blanc, devant lequel un filtre rouge, un filtre vert et un filtre bleu sont déplacés successivement pour chaque image, les signaux rouge, vert et bleu étant séparés image par image au moyen d'un étage de démultiplexage temporel commandé à la cadence de balayage de l'image;

f) en aval de la ligne CCD comportant le dispositif à registres à décalage est monté un dispositif de mémoire de points d'image, dans lequel les signaux des points d'image sont enregistrés ligne par ligne et sont lus ligne par ligne, sur demande, un canal particulier étant associé à chaque couleur fondamentale, le rouge, le vert et le bleu.

2. Dispositif suivant la revendication 1, caractérisé par le fait que pour la reproduction et le copiage d'images formés de négatifs, il est prévu un circuit d'inversion de phase (41) qui est constitué de préférence par des étages inverseurs.

3. Dispositif suivant la revendication 1 ou 2, caractérisé par le fait qu'en aval du circuit CCD sont branchés un étage correcteur de $\gamma$ servant à la correction du contraste ainsi qu'un étage d'accentuation des contours servant à accroître la pente des flancs des signaux de transmission.

4. Dispositif suivant l'une des revendications précédentes, caractérisé par le fait que la ligne CCD (12) est reliée par l'intermédiaire d'une matrice rouge-vert-bleu à un détecteur de valeur de noir (39) qui actionne par l'intermédiaire d'un amplificateur de comparaison (37) un moteur à courant continu (M) qui est relié à un dispositif à diaphragme qui permet de régler le flux lumineux d'un dispositif d'éclairement éclairant l'image devant être enregistrée.

5. Dispositif suivant la revendication 4, caractérisé par le fait qu'une liaison de commande (A) relie la sortie de l'amplificateur de comparaison (37) à un étage de combinaison logique (35) qui, lors de l'application d'un signal de démarrage (36), branche pendant un intervalle de temps prédéterminé les tubes images (28, 29, 30) ou le tube image par l'intermédiaire d'un dispositif à étages formant portes (25, 26, 27).

6. Dispositif suivant la revendication 5, caractérisé par le fait que dans le cas de l'utilisation d'un tube image en noir et blanc, devant lequel un filtre rouge, un filtre vert ou un filtre bleu peuvent être pivotés ou déplacés alternativement lors de chaque balayage d'image, il est prévu un compteur numérique (Z2) dont l'entrée de cadence est reliée à un oscillateur (67) dont la fréquence est égale à la fréquence d'oscillation du système à miroir déflecteur, que les sorties du compteur (Z2) sont reliées par l'intermédiaire de trois portes (68, 69, 70; 61, 62, 63) aux trois canaux couleurs de telle sorte que les signaux d'image rouges, les signaux d'image verts et les signaux d'image bleus sont transmis successivement pour chaque image.

7. Dispositif suivant la revendication 6, caractérisé par le fait que les portes sont des portes NON-OU (68, 69, 70), que la première sortie (Q1) d'un compteur numérique à 2 bits (Z2) est reliée directement à la première entrée de la première et de la troisième portes NON-OU (68, 70) et, par l'intermédiaire d'un inverseur (72), à la première entrée de la seconde porte NON-OU (69) et que la seconde sortie (Q2) du compteur numérique à 2 bits (Z2) est reliée directement à la seconde entrée de la première et de la seconde portes NON-OU (68, 69) et, par l'intermédiaire d'un inverseur (73), à la troisième porte NON-OU (70), et qu'un porte NON-ET (71) reliée aux deux sorties (Q1, Q2) du compteur (Z2) est raccordée à l'entrée de remise à l'état initial du compteur, dont l'entrée de cadence est reliée à l'oscillateur fournissant la fréquence image (67), et qu'il est prévu une seconde combinaison de circuits (60) câblée de façon identique, dont le compteur numérique 2 bits (Z1) est relié à un générateur de cadence d'impulsions d'image (57) et dont les portes NON-OU (61, 62, 63) possèdent des troisièmes entrées respectives qui sont reliées à la sortie des portes NON-OU respectivement correspondantes (68, 69, 70) de la première combinaison de circuits.

Fig.1

0 033 944

Fig. 2

Fig. 3

Fig. 4

Fig. 5

Q₁ Q₂

| $Q_1$ | $Q_2$ | |
|---|---|---|
| O | O | ROT |
| H | O | GRÜN |
| H | O | BLAU |
| H | H | RESET |

ANALOG-SCHIEBEREGISTER

DREI-KANAL DEMULTIPLEXER

TAKT-GENERATOR

RESET

RESET

TAKT $T_A$

0 033 944

Fig. 6